(19) **Europäisches Patentamt**
**European Patent Office**
**Office européen des brevets**

(11) **EP 1 595 179 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(51) Int Cl.:
*G02F 1/035* (2006.01)    *G01C 19/72* (2006.01)

(21) Anmeldenummer: **04712544.8**

(22) Anmeldetag: **19.02.2004**

(86) Internationale Anmeldenummer:
**PCT/EP2004/001640**

(87) Internationale Veröffentlichungsnummer:
**WO 2004/074914 (02.09.2004 Gazette 2004/36)**

(54) **DIGITALER PHASENMODULATOR HOHER AUFLÖSUNG FÜR EINE FASEROPTISCHE SIGNALÜBERTRAGUNGS- ODER MESSEINRICHTUNG**

HIGH-RESOLUTION DIGITAL PHASE MODULATOR FOR A FIBER-OPTIC SIGNAL TRANSMISSION OR MEASURING DEVICE

MODULATEUR DE PHASE HAUTE RESOLUTION POUR UN DISPOSITIF A FIBRES OPTIQUES DE TRANSMISSION DE SIGNAUX ET DE MESURE

(84) Benannte Vertragsstaaten:
**CZ FR GB**

(30) Priorität: **21.02.2003 DE 10307526**

(43) Veröffentlichungstag der Anmeldung:
**16.11.2005 Patentblatt 2005/46**

(73) Patentinhaber: **Northrop Grumman LITEF GmbH**
**79115 Freiburg (DE)**

(72) Erfinder:
• **SPAHLINGER, Günter**
**70188 Stuttgart (DE)**
• **NEWZELLA, Alfons**
**79194 Gundelfingen (DE)**
• **VOIGT, Sven**
**79111 Freiburg (DE)**

(74) Vertreter: **Müller - Hoffmann & Partner**
**Patentanwälte**
**Innere Wiener Strasse 17**
**81667 München (DE)**

(56) Entgegenhaltungen:
**WO-A-99/28707     US-A- 5 137 359**

• **VAWTER G A ET AL: "DIGITAL OPTICAL PHASE CONTROL IN RIDGE-WAVEGUIDE PHASE MODULATORS" IEEE PHOTONICS TECHNOLOGY LETTERS, IEEE INC. NEW YORK, US, Bd. 5, Nr. 3, 1. März 1993 (1993-03-01), Seiten 313-315, XP000362933 ISSN: 1041-1135**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen digitalen Phasenmodulator für eine faseroptische Signalübertragungs- oder Messeinrichtung, der eine festgelegte Anzahl von parallel und beidseitig zu einer Lichtführungsstrecke in oder auf einem optischen Substrat angeordneter Elektroden unterschiedlicher Längen aufweist, wobei die Elektroden zu beiden Seiten der Lichtführungsstrecke mit vorzugsweise gleichen Steuerpotenzialen beaufschlagbar sind, derart, dass durch wechselnde Ansteuerauswahl von Elektrodenkombinationen innerhalb eines vorgegebenen Wertebereichs eine Vielzahl von Phasenwerten einstellbar ist.

Die Elektroden des Phasenmodulators werden zur Ansteuerung vorzugsweise mit gleichen Potenzialen beaufschlagt, welche, je nach Lage der Elektroden zur Lichtführungsstrecke, eine positive oder negative Verschiebung der Lichtphase am Ausgang des Modulators bewirken. Im Folgenden werden die Elektroden kurz auch als "positive" bzw. "negative" Elektroden bezeichnet.

Aus der Patentschrift DE 197 53 427 C1 ist es zur Erhöhung der Genauigkeit eines digitalen aus binär gewichteten Flächenelektroden aufgebauten Phasenmodulators für eine faseroptische Signalübertragungs- oder Messeinrichtung, vorzugsweise für ein faseroptisches Interferometer, bekannt, einen niedersignifikanten Anteil eines binären Ansteuersignals über einen Digital-/Analog-Wandler mit nachgeschaltetem Treiber einer bestimmten separat vorhandenen Analogelektrode des ansonsten digitalen Phasenmodulators zuzuführen. Außerdem ist dort vorgesehen, den Elektroden des Phasenmodulators individuell zuordenbare Korrekturwerte in einer Speichertabelle abzulegen, so dass sich insbesondere herstellungsbedingte Ungenauigkeiten der Elektrodenlängen bzw. -flächen und damit die Phasenmodulationswerte korrigieren lassen. Die in der genannten DE-Patentschrift beschriebene Lösung ermöglicht zwar eine Erhöhung der Auflösung, jedoch ist der technische Aufwand vergleichsweise hoch, nicht zuletzt durch den notwendigen Einsatz eines D/A-Wandlers mit Treiber, dessen analoge Ausgangswerte außerdem nur begrenzt temperaturstabil sind. Insbesondere bei der Verwendung solcher Phasenmodulatoren in faseroptischen Gyroskopen (FOGs) mit geschlossener Regelschleife, bei der die Rückstellelektronik ein digitales Rückstellsignal relativ hoher Auflösung, z. B. ein 12 Bit-Signal zur Kreiselrückstellung liefert, aber auch für andere faseroptische Signalübertragungs - und Messeinrichtungen, ist eine höhere als bisher technologisch beherrschbare Auflösung des digitalen Phasenmodulators wünschenswert.

Aus der US 5,137,359 ist ferner ein digitaler Phasen modulator mit dem Merkmalen der Oberbegriffe der unabhängigen Ansprüche bekannt, der für die Verwendung in einem Schaltkreis zu Ausgangsmessung ausgebildet ist.

Ein Problem bei der Herstellung digital ansteuerbarer, integriert-optischer Modulatoren, beispielsweise solchen für FOGs, die in einem multifunktionalen integriert-optischen Chip (MIOC) implementiert werden, ist die erreichbare bzw. reproduzierbare Auflösung für die Elektrodenlängen. Ausgehend von einer bereitgestellten $U_\pi$-Spannung und einer Mindestlänge der niedrigstsignifikanten (LSB)-Elektrode von etwa 40 μm ergibt sich für einen technisch relativ gut realisierbaren 9 Bit-Wandler eine Gesamtelektrodenlänge von etwa 10 mm. Versucht man die Mindestlänge der LSB-Elektrode weiter zu verkleinern, so führt dies zu erheblichen Ungenauigkeiten aufgrund von Feldverzerrungen und einer relativen Genauigkeit beim LSB-Wert durch nicht mehr beherrschbare Herstellungstoleranzen. Unter diesen Vorgaben für $U_\pi$ und die LSB-Länge der kleinsten Elektrode ergäbe sich für einen 12 Bit-Wandler eine Elektrodenlänge von 80 mm. Dies ist unrealisierbar bzw. aufgrund der erheblichen Vergrößerung der Baulänge unrealistisch. Die Gesamtlänge des Modulators ist durch die genannten und eine Reihe von anderen technologischen Randbedingungen auf wenige Zentimeter begrenzt.

Daraus ergibt sich die der Erfindung zugrundeliegende Aufgabe, einen digitalen Phasenmodulator für eine faseroptische Signalübertragungs- oder Messeinrichtung bereitzustellen, mit dem sich ohne Vergrößerung seiner Baulänge eine erhebliche Erhöhung der Auflösung realisieren lässt.

Diese Aufgabe wird gelöst durch die digitalen Phasenmodulatoren gemäss Anspruch 1 und 3.

Basierend auf einem ersten Grundgedanken der Erfindung wird ein digitaler Phasenmodulator gemäß der eingangs genannten Gattung bereitgestellt, der dadurch gekennzeichnet ist, dass die Elektroden längs der Lichtführungsstrecke in oder auf dem integriert-optischen Chip in mehreren Tripeln angeordnet sind, wobei innerhalb eines Tripels je zwei Elektroden aufeinanderfolgender Länge das gleiche Längenverhältnis $\nu$ zueinander haben.

Es ist zweckmäßig und vorteilhaft, die jeweils längste Elektrode eines Tripels auf der einen und die beiden anderen kürzeren Elektroden auf der anderen Längsseite der Lichtführungsstrecke auf oder in dem Substrat anzuordnen.

In vorteilhafter und besonders zu bevorzugender Ausgestaltung beträgt das Längenverhältnis jeweils zweier aufeinanderfolgender Elektroden

$$\nu = \frac{1}{2} + \sqrt{\frac{5}{4}} \approx 1{,}618.$$

Bei einer abgewandelten aber eigenständigen Ausführungsvariante der Erfindung ist vorgesehen, die Elektroden längs der Lichtführungsstrecke in mehreren Tripeln anzuordnen, wobei ab dem zweiten bis zum meist signifikanten (MSB) Tripel innerhalb eines Tripels je zwei Elektroden aufeinanderfolgender Länge das gleiche Längenverhältnis zueinander haben, während die Elektroden des ersten, niedrigstsignifikanten (LSB) Tripels so gewählt sind, dass sich die kleinsten Schrittweiten des Ausgangswertebereichs des Phasenmodulators durch Differenzbildung zwischen mindestens zwei größeren Elektroden bilden lassen.

Für diese zweite grundsätzliche Ausgestaltung der Erfindung ist es ebenfalls zweckmäßig, die jeweils längste Elektrode eines Tripels auf der einen und die beiden anderen, kürzeren Elektroden auf der anderen Seite der Lichtführungsstrecke anzuordnen, wobei beim ersten Tripel die Summe der Längen der beiden kürzeren Elektroden gleich der Länge der längsten Elektrode ist.

In besonders vorteilhafter Ausgestaltung der zweiten grundsätzlichen Lösung des der Erfindung zugrundeliegenden Problems ist vorgesehen, dass die beiden kürzeren Elektroden E0, E1 des ersten niedrigsignifikanten (LSB) Tripels den Längenwert $a_1 = |5|$ bzw. $b_1 |6|$ und die längste Elektrode (E2) dieses Tripels den Längenwert $c_1 = |11|$ aufweisen, während für die Elektrodenlängen ($a_2$ bis $c_4$) alle übrigen, höhersignifikanten Elektroden E3 bis E11 das Längenverhältnis $\nu$ gewählt ist zu

$$\nu = \frac{1}{2} + \sqrt{\frac{5}{4}} \approx 1{,}618.$$

Soll der Phasenmodulator gemäß der Erfindung aus Binärwerten betrieben werden, so ist eine elektronische Korrekturtabelle zur Umrechnung von binären Phasenwerten in die nicht-binären Ansteuerwerte für die Elektroden vorzusehen. Diese Korrekturtabelle kann speicherprogrammierbar ausgelegt sein; sie kann insbesondere auch noch Korrekturwerte zur Korrektur von herstellungs- und/oder betriebsbedingten Fehlern des Phasenmodulators enthalten. Auch kann es vorteilhaft sein, mindestens zwei unterschiedlich programmierte Korrekturtabellen vorzusehen, zwischen denen in Abhängigkeit eines externen Parameters, z. B. der Temperatur, durch eine Steuereinrichtung umgeschaltet werden kann.

Die Erfindung und vorteilhafte Einzelheiten werden nachfolgend unter Bezug auf die Zeichnungen in beispielsweiser Ausführungsform näher erläutert. Es zeigen:

**Fig. 1**  das Anordnungsschema einer zur Zeit als beste Ausführungsform realisierten Aufteilung und Anordnung der Elektroden eines nicht-binären Phasenmodulators gemäß der Erfindung;

**Fig. 2**  das Lay-out eines integriert-optischen Chips, hier dargestellt als Teilausschnitt eines MIOC eines faseroptischen Gyroskops nach einem links davon angeordneten Strahlteiler (Y-Verzweiger);

**Fig. 3**  den Blockschaltbildaufbau einer prinzipiellen Anordnung zur elektronischen Korrektur bzw. Umrechnung binärer Werte in die einzelne Elektroden des erfindungsgemäßen Phasenmodulators beaufschlagende nicht-binäre Werte;

**Fig. 4**  eine der Fig. 3 entsprechende Blockschaltbildanordnung für den Aufbau einer Korrekturtabelle mit externer Korrekturmöglichkeit, und

**Fig. 5**  einen abgewandelten Blockschaltbildaufbau der Schaltungsanordnung nach Fig. 3, bei der zwischen mehreren in einem Speicher abgelegten Korrekturtabellen wahlweise umgeschaltet werden kann.

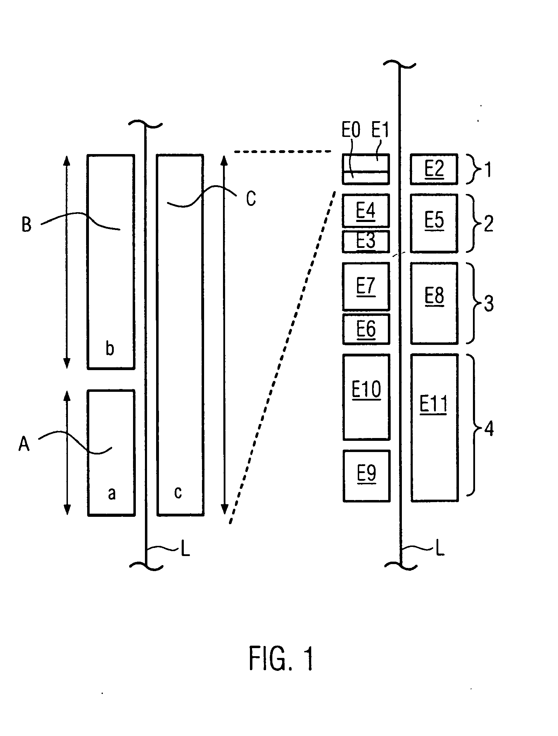

Der grundsätzliche Aufbau eines digitalen Phasenmodulators mit erfindungsgemäßen Merkmalen ist in Fig. 1 veranschaulicht, wobei zur besseren Erkennbarkeit auf der linken Seite ein Detailausschnitt eines Elektrodentripels mit einer Anordnung der beiden kürzeren Elektroden A, B auf der einen und der größten Elektrode C dieses Tripels auf der rechten Seite einer nur schematisch angedeuteten Lichtführungsstrecke L innerhalb des (in Fig. 1 nicht gezeigten) Substrats des MIOC veranschaulicht ist.

Gemäß der ersten grundsätzlichen Erfindungsidee ist gefordert, dass je zwei Elektroden aufeinanderfolgender Größe das gleiche Größenverhältnis $\nu$ zueinander haben. Damit ergibt sich bei Betrachtung des in Fig. 1 links vergrößert herausgezeichneten Detailausschnitts unter Verwendung der Elektrodenwerte a, b, c für die Elektroden A, B, C der Zusammenhang:

$$\frac{b}{a} = \frac{c}{b} = v$$

$$c = a + b \qquad\qquad\qquad (Gl.\ 1)$$

Daraus folgt:

$$c = v^2 \cdot a$$
$$1 = v^2 - v \qquad\qquad\qquad (Gl.\ 2)$$

Damit ergibt sich für das Größenverhältnis $v$:

$$v = \frac{1}{2} + \sqrt{\frac{5}{4}} \approx 1{,}618. \qquad\qquad (Gl.\ 3)$$

Ordnet man den in Fig. 1 in den vier Elektrodentripeln 1 bis 4 enthaltenen Elektroden E0 bis E11 innerhalb eines Tripels die Werte $a_1$, $b_1$, $c_1$ ... $a_4$, $b_4$, $c_4$ (vgl. nachfolgende Werteliste) zu, so erhält man unter Beachtung der obigen Forderung beispielsweise die Bedingung $a_2 = v \cdot c_1$.

Die daraus folgende Potenzfolge 1, $v$, $v^2$, $v^3$ ... ist noch mit den Vorzeichen der Feldstärkerichtung innerhalb des Phasenmodulators zu multiplizieren, da beispielsweise die rechtsseitigen Elektroden in Fig. 1 (also die Elektrode C im Detailausschnitt) jeweils mit umgekehrten Vorzeichen auf die Phase des Lichts wirken, wie die auf der anderen Seite der Lichtführungsstrecke L angeordneten Elektroden A, B.

Tabelle 1:

| Werteliste für Elektroden (vgl. Fig. 1) | |
|---|---|
| Elektroden | Wertezuordnung im Tripel |
| E0 | $a_1$ |
| E1 | $b_1$ |
| E2 | $c_1$ |
| E3 | $a_2$ |
| E4 | $b_2$ |
| E5 | $c_2$ |
| E6 | $a_3$ |
| E7 | $b_3$ |
| E8 | $c_3$ |
| E9 | $a_4$ |
| E10 | $b_4$ |
| E11 | $c_4$ |

Man erhält die in Tabelle 2 aufgeführten Gewichtungen bzw. Wertefolgen :

Tabelle 2: Wertefolge

| | 1 | 1,00 |
|---|---|---|

(fortgesetzt)

| | | |
|---|---|---|
| | $\nu$ | 1,62 |
| - | $\nu^2$ | -2,62 |
| | $\nu^3$ | 4,23 |
| | $\nu^4$ | 6,85 |
| - | $\nu^5$ | -11,09 |
| | $\nu^6$ | 17,94 |
| | $\nu^7$ | 29,03 |
| - | $\nu^8$ | -46,97 |
| | $\nu^9$ | 75,99 |
| | $\nu^{10}$ | 122,96 |
| - | $\nu^{11}$ | -198,96 |

Wegen der anfänglichen Bedingung (Gl. 1) entfallen alle Kombinationen a + b + c = 0. Somit ergeben sich je Elektrodentripel sieben unterschiedliche Ausgangswerte. Für vier Elektrodentripel ergeben sich zwölf unterschiedliche Zustände, da identische Kombinationen durch den Zusammenhang $\nu^3 = \nu^2 + \nu$ auftreten. Das Längenverhältnis zwischen der längsten und der kürzesten Elektrode beträgt 1:259.

Die Bedingung a + b = c (Gl. 1) für gegenüberliegende Elektroden begrenzt die maximale Anzahl der mit 12 Bit beschreibbaren Ausgangswerte unabhängig von den Längenverhältnissen der Tripel zueinander. Da in jedem Tripel die Null mit zwei unterschiedlichen Bitkombinationen [000] und [111] erzeugt wird, sind sieben verschiedene Werte darstellbar. Für die vier Elektrodentripel 1 bis 4 nach Fig. 1 ergeben sich damit $7^4$ = 2401 Werte, also annähernd eine Auflösung von 10 Bit.

Bei der zweiten grundsätzlichen Ausführungsform der Erfindung wird wiederum die Elektrodenkonfiguration und Aufteilung gemäß Fig. 1 zugrundegelegt, d. h. dieser Ansatz geht ebenfalls von der nicht-binären 1,618-Konfiguration aus, vermeidet aber Wertebereichsüberlappungen zwischen einzelnen Elektrodentripeln.

Will man diese Forderung erfüllen, so führt dies zur nachfolgenden Gl. 4, die besagt, dass die kleinste Elektrode eines Tripels um eine Einheitsschrittweite |1| größer sein soll als die Summe der Längen aller kleineren Elektrodentripel:

$$a_{\mathrm{x}} = l_{\mathrm{x},0} = \left( \sum_{i=0}^{\mathrm{x}-1} \left( \sum_{j=0}^{2} |l_{i,j}| \right) \right) + 1 \text{ für } \mathrm{x} \in \{1,2,3\} \qquad \text{(Gl. 4)}$$

Die Größe $\ell_{i,j}$ bezeichnet die Elektrodenlängen, wobei

● der Index "i" die Tripelnummer {0,1,2,3...} bezeichnet und

● der Index "j" die Nummer der Elektrode im jeweiligen Tripel {0,1,2} angibt.

In anderen Worten, "$\ell_{i,j}$" stellt somit die Länge der j-ten Elektroden des i-ten Tripels dar.

Die Länge der jeweils mittleren Elektrode $b_x$ ist das doppelte von $a_x$, das heißt

$$b_{\mathrm{x}} = 2\ a_{\mathrm{x}}.$$

Die größte Elektrodenlänge $c_x$ innerhalb eines Tripels ergibt sich als die Summe von $a_x$ und $b_x$, also zu

$$c_{\mathrm{x}} = a_{\mathrm{x}} + b_{\mathrm{x}}.$$

Die daraus resultierenden Bitwichtungen sind beispielhaft in der nachfolgenden Tabelle 4 zusammengestellt. Die Zuordnung der Elektrodenbezeichnungen $\ell$ und der Tripel-internen Elektrodenbezeichnungen a, b, c dient zur besseren Anschauung und zur Vermeidung von Doppelindizierung bei der Positionszuordnung.

Tabelle 4: Wertefolge mit Ansatz nach G1. 4

| Variable | Position | Wert |
|---|---|---|
| $l_{0,0}$ | $a_0$ | 1 |
| $l_{0,1}$ | $b_0$ | 2 |
| $l_{0,2}$ | $c_0$ | -3 |
| $l_{1,0}$ | $a_1$ | 7 |
| $l_{1,1}$ | $b_1$ | 14 |
| $l_{1,2}$ | $c_1$ | -21 |
| $l_{2,0}$ | $a_2$ | 49 |
| $l_{2,1}$ | $b_2$ | 98 |
| $l_{2,2}$ | $c_2$ | -147 |
| $l_{3,0}$ | $a_3$ | 343 |
| $l_{3,1}$ | $b_3$ | 686 |
| $l_{3,2}$ | $c_3$ | -1029 |

Das Größenverhältnis zwischen der LSB und der MSB-Kombination beträgt hier 1:1029. Die Gesamtheit der Bitkombinationen nach Tabelle 4 liefert 2400 unterschiedliche Ausgangswerte. Die maximal mögliche Zahl an Ausgangswerten für diese Elektrodenkonfiguration ist also wesentlich höher als bei der ersten Ausführungsvariante der Erfindung.

Die Abstände zwischen größenmäßig benachbarten Werten betragen "0" oder "1". Andere Abstufungen treten bei dieser Verteilung nicht auf. Bezogen auf den abgedeckten Wertebereich beträgt die Auflösung also ca. 11 Bit.

Um aus den oben genannten technologischen Gründen das Größenverhältnis zwischen längster und kürzester Elektrode weiter zu verbessern, kann man, ausgehend von Tabelle 4, die Elektroden des LSB-Tripels 1 wie in nachfolgender Tabelle 5 beispielhaft gezeigt vergrößern.

Gemäß dieser weiteren Spezies der zweiten grundsätzlichen Ausführungsvariante der Erfindung werden jetzt die kleinsten Ausgangswerte nicht mehr durch Ansteuerung einzelner Elektroden, sondern durch Differenzbildung zwischen mindestens zwei größeren Elektroden gebildet.

Der linear abgedeckte Wertebereich ändert sich damit nur unwesentlich, aber das Größenverhältnis zwischen kleinster und größter Elektrode beträgt, wie sich beispielhaft aus Tabelle 5 ersehen lässt, nur noch 5:1029 = 1:206.

Tabelle 5: Wertefolge mit Ansatz nach Gleichung 4, bei modifiziertem LSB-Tripel (vgl. Fig. 1)

| Position | Wert |
|---|---|
| $a_0$ | 5 |
| $b_0$ | 6 |
| $c_0$ | -11 |
| $a_1$ | 7 |
| $b_1$ | 14 |
| $c_1$ | -21 |
| $a_2$ | 49 |
| $b_2$ | 98 |
| $c_2$ | -147 |
| $a_3$ | 343 |

(fortgesetzt)

| Position | Wert |
|---|---|
| $b_3$ | 686 |
| $c_3$ | -1029 |

Für die Längenverhältnisse der Elektroden der größeren Elektrodentripel, das heißt ab dem zweitniedrigstsignifikanten Elektrodentripel wird die jeweils kleinste Elektrode $a_x$ wiederum über die Gleichung (4) berechnet jetzt mit

$$a_x = \left( \sum_{i=0}^{x-1} \left( \sum_{j=0}^{2} |l_{i,j}| \right) \right) + 1$$

Die Länge der jeweils mittleren Elektrode $b_x$ ist das doppelte von $a_x$, das heißt

$$b_X = 2\, a_X.$$

Die größte Elektrodenlänge $c_x$ innerhalb eines Tripels ergibt sich als die Summe von $a_x$ und $b_x$, also zu

$$c_X = a_X + b_X.$$

Die Verlängerung der Elektroden des untersten Tripels um genau "5" erfolgte primär, weil das so erreichte Längenverhältnis (= 1:206) in einem technisch gut beherrschbaren Bereich liegt.

Grundsätzlich gelten für diese anzustrebende Verbesserung der Herstellbarkeit der Elektrodenstruktur folgende Überlegungen: Bei der Konstruktion sollte die Tripelstruktur erhalten bleiben (c = a + b) und die erzeugte Ausgangskennlinie im zentralen Bereich keine Sprünge aufweisen. Letzteres erfordert, dass die Werte 0, ±1, ±2, ... erzeugt werden können.

Der kleinste Wert, der vom nächsten oberhalb des untersten Tripels erzeugt werden kann, ist beim Beispiel der Tabelle 5 der Wert ±7. Somit müssen die Werte von 1...6 durch das Zuschalten des unteren Tripels generiert werden. Die -1 wird beispielsweise als Summe der 6, der 14 und -21 gebildet.

Verallgemeinert ist zu fordern, dass

● alle Werte 1...6 durch Summen- oder Differenzbildung zwischen bis zu zwei Elektroden des untersten Tripels und dem Betrag von einer Elektrode des nächsten Tripels oder 0 konstruierbar sind.
● keine Elektrodengewichtung doppelt vorkommt.

Die Verallgemeinerung der Randbedingungen für die Verlängerung der Elektroden des untersten Tripels lautet:

Die neue Elektrodenlänge $l'_{ij}$ lässt sich durch Kombination einer vorher gewählten Elektrodenlänge und der Länge einer Elektrode eines anderen Tripels erzeugen (Linearkombination):

$$l'_{i,j} = \pm l_{i,j} \pm l_{k,l} \quad \text{mit} \quad i \neq k \qquad \text{(Gl. 5)}$$

Der Index "i" bezeichnet wiederum die Tripelnummer {1,2,3...} während der Index "j" sich auf die Nummer der Elektrode im jeweiligen Tripel {0,1,2} bezieht. Der Index "k" bezeichnet - analog wie "i" - eine Tripelnummer. Es handelt sich um die Nummer desjenigen Tripels, aus dem die zweite Elektrodenlänge zu nehmen ist.

Zusätzlich müssen die neuen Längen wiederum die Bedingung a + b = (-)c erfüllen.

Wird diese Bedingung nicht erfüllt, so muss die Länge der längsten Elektrode ($l_{3,2}$) des untersten Drittels um die entsprechende Differenz angepasst werden gemäß folgender Beziehung:

$$l'_{3,2} = l_{3,2} + \left( \sum_{j=0}^{2} l'_{0,j} \right) \qquad\qquad \text{(Gl. 6)}$$

Daraus lassen sich z. B. folgende Kombinationen für das unterste Tripel darstellen:

- 1,2,-3 (Ausgangsverteilung; Tabelle 4)
- 2,4,-6
- 2,8,-10
- 3,5,-8
- 3,6,-9
- 5,6,-11 (Tabelle 5)
- 5,10,-15
- 6,10,-16
- 6,12,-18
- 8,9,-17.

Beim letzten Beispiel ist die Elektrode mit Wert $a_0$ schon größer als die kleinste Elektrode des folgenden Tripels, daher bringt eine weitere Verlängerung des unteren Tripels bezüglich der Verkleinerung der Längenverhältnisse keinen weiteren Vorteil.

Die "5" als Startwert gemäß Tabelle 5 wurde - wie oben schon beschrieben - deshalb gewählt, weil das Längenverhältnis von längster zu kürzester Elektrode damit hinreichend reduziert wurde. Zudem lässt sich diese Kombination einfach durch eine konstante Längenvergrößerung der ursprünglichen Längen der Werte von $a_0$ und $b_0$ (aus Tabelle 4) erzeugen.

Ersichtlicherweise gilt für die zweite grundsätzliche Ausführungsform der Erfindung prinzipiell die elementare Tripelstruktur der ersten beschriebenen Ausführungsform, wobei die Längenverhältnisse ab dem zweiten Elektrodentripel binärisiert sind.

Die Größe des linear mit einer Basis-Schrittweite (z. B. |1|) abgedeckten Bereichs reicht von -1192 bis +1194. Die Auflösung beträgt wieder (annähernd) 11 Bit.

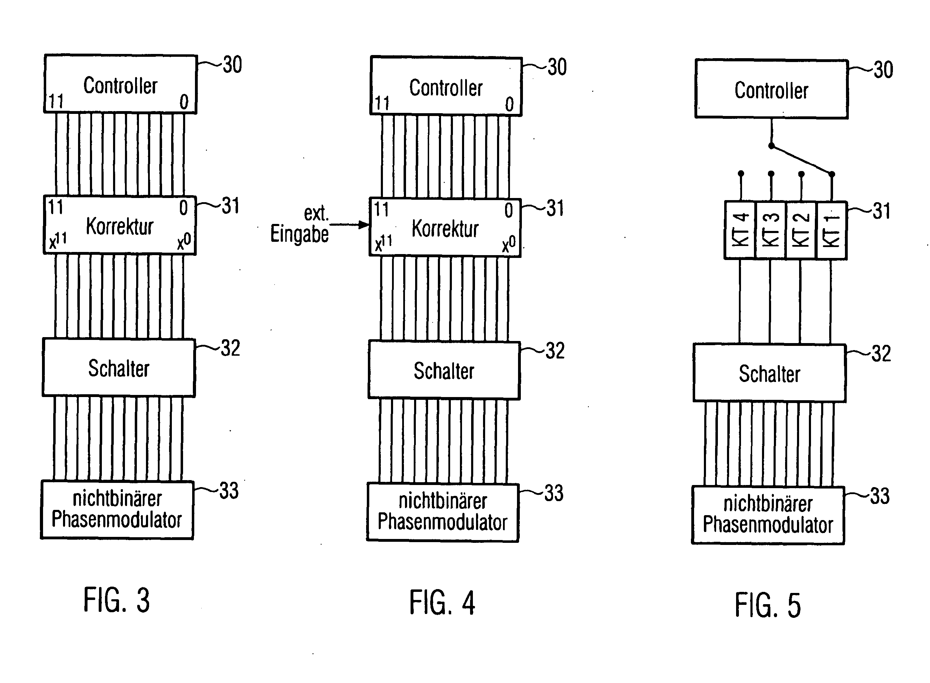

Soweit innerhalb der Ansteuerelektronik für einen erfindungsgemäßen Phasenmodulator binäre Signalverarbeitung vorgesehen ist, was in der Regel der Fall sein wird, ist der Einsatz eines nicht-binären Phasenmodulators gemäß der Erfindung mit Hilfe einer Korrekturtabelle möglich, welche die errechneten Digitalwerte in nicht-binäre Werte umwandelt. Diese Korrekturtabelle kann speicherprogrammierbar ausgelegt werden und kann neben der Umwandlung von binären in nicht-binäre Werte auch herstellungs- oder betriebsbedingte Fehler im Phasenmodulator korrigieren. Die Fig. 3 veranschaulicht den grundsätzlichen Schaltungsaufbau: Von einer Steuereinrichtung (Controller) 30 werden die einem bestimmten Phasenwert entsprechenden Binärwerte einer Umrechnungs- oder Korrekturtabelle 31 zugeführt, die einen nachfolgenden Schalter 32 steuert, über den die einzelnen Elektroden E0 bis E11 des Phasenmodulators 33 mit einer dem nicht-binären Wert entsprechenden Signalkombination angesteuert werden.

Die abgewandelte Ausführungsvariante der Umwandlungs- bzw. Korrekturschaltung nach Fig. 4 ermöglicht es, an der Korrekturtabelle ein externes Signal zuzuführen, z. B. ein Temperatursignal oder ein Signal, das alterungsbedingte Änderungen als Nachkorrektur berücksichtigt.

Bei der Umsetz- und Korrekturschaltung nach Fig. 5 sind im dargestellten Beispiel mehrere, z. B. vier Korrekturtabellen KT1 bis KT4 vorgesehen, die in einem ASIC integriert sein können und es ebenfalls ermöglichen, in Abhängigkeit von einem äußeren Signal jeweils eine optimierte Korrekturtabelle zuzuschalten.

Aufgrund der Erfindung ist es möglich, einen digitalen Phasenmodulator mit deutlich erhöhter Auflösung herzustellen, ohne ein Längenverhältnis fordern zu müssen, das beispielsweise einem Wert von $1:2^{11}$ entspricht. Daraus ergeben sich erhebliche technologische Vorteile.

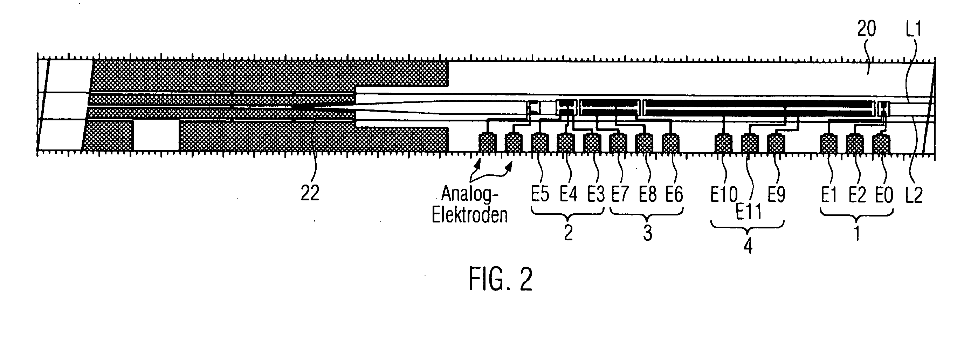

Fig. 2 veranschaulicht ein konkretes Ausführungsbeispiel der Erfindung bezogen auf den MIOC eines faseroptischen Gyroskops mit geschlossener Regelschleife. Im Substrat eines MIOCs 20 verlaufen nach einer Verzweigung 22 (Y-Verzweigung) zwei parallele Lichtführungsstrecken L1, L2 für den Hin - und Rückweg einer die Messspule eines FOG durchsetzenden polarisierten Lichtwelle, die durch einen digitalen Phasenmodulator in paralleler Doppelausführung auf dem Hin- und Rückweg mit der gleichen Phase, jedoch mit umgekehrten Vorzeichen beaufschlagt wird. Der in paralleler Doppelausführung vorhandene Phasenmodulator ist erfindungsgemäß in vier Elektrodentripel aufgeteilt, die entsprechend Fig. 1 mit den Bezugshinweisen 1 bis 4 gekennzeichnet sind. Entlang der in Fig. 2 unteren Kante des MIOC-Substrats sind die Ansteueranschlüsse für die Elektroden vorgesehen, die in Übereinstimmung mit Fig. 1 mit E0 bis E11 bezeichnet sind. Die Gesamtlänge dieser Phasenmodulatoranordnung auf dem MIOC-Chip beträgt beispielsweise etwa 10 mm.

**Patentansprüche**

1. Digitaler Phasenmodulator für eine faseroptische Signalübertragungs- oder Messeinrichtung, der eine vorgegebene Gesamtanzahl von parallel und beidseitig zu einer Lichtführungsstrecke in oder auf einem optischen Substrat angeordneten Elektroden unterschiedlicher Längen aufweist.
   wobei die Elektroden zu beiden Seiten der Lichtführungsstrecke mit vorzugsweise gleichen Steuerpotenzialen beaufschlagbar sind, derart, dass durch wechselnde Ansteuerauswahl von Elektrodenkombinationen innerhalb eines vorgegebenen Wertebereichs eine Vielzahl von Phasenwerten für eine auf der Lichtführungsstrecke laufende Lichtwelle einstellbar ist,
   und die Elektroden (E0 bis E11) längs der Lichtführungsstrecke (L) in mehreren Tripeln angeordnet sind, wobei innerhalb eines Tripels je zwei Elektroden aufeinander-folgender Länge das gleiche Längenverhältnis $\nu$ zueinander haben,
   **dadurch gekennzeichnet, dass** die jeweils längste Elektrode (C) eines Tripels (A, B, C) auf der einen und die beiden anderen kürzeren Elektroden (A, B) längs der anderen Seite der Lichtführungsstrecke auf oder in dem Substrat angeordnet sind.

2. Phasenmodulator nach Anspruch 1, **dadurch gekennzeichnet, dass** das Längenverhältnis

$$\nu = \frac{1}{2} + \sqrt{\frac{5}{4}} \approx 1{,}618$$

beträgt.

3. Digitaler Phasenmodulator für eine faseroptische Signalübertragungs- oder Messeinrichtung, der eine vorgegebene Gesamtanzahl von parallel und beidseitig zu einer Lichtführungsstrecke in oder auf einem optischen Substrat angeordneten Elektroden unterschiedlicher Längen aufweist,
   wobei die Elektroden zu beiden Seiten der Lichtführungsstrecke mit vorzugsweise gleichen Steuerpozentialen beaufschlagbar sind, derart, dass durch wechselnde Ansteuerauswahl von Elektrodenkombinationen innerhalb eines vorgegebenen Wertebereichs eine Vielzahl von Phasenwerten für eine auf der Lichtführungsstrecke laufende Lichtwelle einstellbar ist.
   und
   die Elektroden längs der Lichtführungsstrecke (L) in mehreren Tripeln angeordnet sind.
   **dadurch gekennzeichnet,**
   **dass**
   die Elektrodengängen $\ell_{i,j}$ der Elektrodentripel oberhalb des untersten niedrigstsignifikanten (LSB) Tripels so festgelegt sind, dass für die
   Länge $\ell_{x,0}$ der jeweils kleinsten Elektrode (A) gilt:

$$a_x = \ell_{x,0} = \left( \sum_{i=0}^{x-1} \left( \sum_{j=0}^{2} |\ell_{i,j}| \right) \right) + 1$$

für $x \in \{1,2,3\}$
wobei der Index "**i**" die Tripelnummer $\{0,1,2.3...\}$ bezeichnet und der Index "**j**" die Nummer $\{0,1,2\}$ der jeweiligen Elektrode im Tripel angibt und

   • für die Länge $b_x$ der jeweils mittleren Elektrode die Beziehung $b_x = 2\,a_x$, und
   • für die Länge $c_x$ der jeweils längsten Elektrode die Beziehung $c_x = a_x + b_x$ gilt,

wobei als Startwerte für die Berechnung $(|a_0|, |b_0|, |c_0|) = (|\ell_{0,0}|, |\ell_{0,1}|, |\ell_{0,2}|) = (1, 2, 3)$ gewählt werden und

- die Elektrodenlängen des ersten niedrigstsignifikanten (LSB) Tripels so gewählt sind, dass sich die kleinsten Schrittweiten der Lichtphase im Ausgangswertebereich des Phasenmodulators durch Summen- oder Differenzbildung zwischen den Phasenwerten von bis zu zwei Elektroden des untersten Tripels und einer Elektrode des nächsten Tripels oder Null konstruierbar sind,

- zum Verkleinern des Längenverhältnisses der längsten zur kürzesten Elektrode des Modulators im untersten niedrigstsignifikanten Elektroden relativ verlängert sind, derart, dass eine Addition der Längenwerte der beiden kürzeren Elektroden (E0, E1) den Längenwert der längsten Elektrode (E2) dieses untersten Tripels ergibt.

und **dass** die jeweils längste Elektrode (C) eines Tripels (A, B, C) auf der einen und die beiden anderen, kürzeren Elektroden (A, B) auf der anderen Seite der Lichtführungsstrecke (L) angeordnet sind, und dass die Summe der Längen der beiden kürzeren Elektroden (A, B) gleich der Länge der längsten Elektrode (C) ist.

4. Phasenmodulator nach Anspruch 3, **dadurch gekennzeichnet, dass** die beiden kürzeren Elektroden (E0, E1) des untersten Tripels den Längenwert $a_0 = |5|$ bzw. $b_0 = |6|$ und die längste Elektrode (E2) dieses Tripels den Längenwert $c_0 = |11|$ aufweisen.

5. Phasenmodulator nach Anspruch 3, **dadurch gekennzeichnet, dass** die beiden kürzeren Elektroden (E0, E1) des untersten Tripels den Längenwert $a_0 = |2|$ bzw. $b_0 = |4|$ und die längste Elektrode (E2) dieses Tripels den Längenwert $c_0 = |6|$ aufweisen.

6. Phasenmodulator nach Anspruch 3, **dadurch gekennzeichnet, dass** die beiden kürzeren Elektroden (E0, E1) des untersten Tripels den Längenwert $a_0 = |2|$ bzw. $b_0$ $|8|$ und die längste Elektrode (E2) dieses Tripels den Längenwert $c_0 = |10|$ aufweisen.

7. Phasenmodulator nach Anspruch 3, **dadurch gekennzeichnet, dass** die beiden kürzeren Elektroden (E0, E1) des untersten Tripels den Längenwert $a_0 = |3|$ bzw. $b_0 = |5|$ und die längste Elektrode (E2) dieses Tripels den Längenwert $c_0 = |8|$ aufweisen.

8. Phasenmodulator nach Anspruch 3, **dadurch gekennzeichnet, dass** die beiden kürzeren Elektroden (E0, E1) des untersten Tripels den Längenwert $a_0 = |3|$ bzw. $b_0 = |6|$ und die längste Elektrode (E2) dieses Tripels den Längenwert $c_0 = |9|$ aufweisen.

9. Phasenmodulator nach Anspruch 3, **dadurch gekennzeichnet, dass** die beiden kürzeren Elektroden (E0, E1) des untersten Tripels den Längenwert $a_0 = |5|$ bzw. $b_0 = |10|$ und die längste Elektrode (E2) dieses Tripels den Längenwert $c_0 = |15|$ aufweisen.

10. Phasenmodulator nach Anspruch 3, **dadurch gekennzeichnet, dass** die beiden kürzeren Elektroden (E0, E1) des untersten Tripels den Längenwert $a_0 = |6|$ bzw. $b_0 = |10|$ und die längste Elektrode (E2) dieses Tripels den Längenwert $c_0 = |16|$ aufweisen.

11. Phasenmodulator nach Anspruch 3, **dadurch gekennzeichnet, dass** die beiden kürzeren Elektroden (E0, E1) des untersten Tripels den Längenwert $a_0 = |6|$ bzw. $b_0 = |12|$ und die längste Elektrode (E2) dieses Tripels den Längenwert $c_0 = |18|$ aufweisen.

12. Phasenmodulator nach Anspruch 3, **dadurch gekennzeichnet, dass** die beiden kürzeren Elektroden (E0, E1) des untersten Tripels den Längenwert $a_0 = |8|$ bzw. $b_0 = |9|$ und die längste Elektrode (E2) dieses Tripels den Längenwert $c_0 = |17|$ aufweisen.

13. Phasenmodulator nach einem der vorstehenden Ansprüche, **gekennzeichnet durch** eine Ansteuerelektonik mit einer dem Phasenmodulator zugeordneten elektronischen Korrekturtabelle zur Umrechnung von binären Phasenwerten in nicht-binäre Ansteuerwerte für die Elektroden.

14. Phasenmodulator nach Anspruch 13, **dadurch gekennzeichnet, dass** die Korrekturtabelle speicherprogrammierbar ausgelegt ist.

15. Phasenmodulator nach Anspruch 14, **dadurch gekennzeichnet, dass** die Korrekturtabelle zusätzlich zur binär/nicht-binär Umwandlung Korrekturwerte zur Korrektur von herstellungs- und/oder betriebsbedingten Fehlern des Phasenmodulators enthält.

**16.** Phasenmodulator nach Anspruch 13, **dadurch gekennzeichnet, dass** mindestens zwei unterschiedlich programmierte Korrekturtabellen (KT1 bis KT4) vorhanden sind, zwischen denen in Abhängigkeit eines externen Parameters durch eine Steuereinrichtung (30) umschaltbar ist.

**17.** Phasenmodulator nach Anspruch 16, **dadurch gekennzeichnet, dass** der externe Parameter die Temperatur ist.

**Claims**

**1.** A digital phase modulator for a fiber-optic signal transmission or measurement device, which has a predetermined total number of electrodes of different length which are arranged parallel and on both sides of a light guidance path in or on an optical substrate, in which case preferably identical control potentials can be applied to the electrodes on both sides of the light guidance path, in such a way that a large number of phase values for a light wave which is running on the light guidance path can be set by changing the drive selection of electrode combinations within a predetermined value range,
and the electrodes (E0 to E11) are arranged in a plurality of triples along the light guidance path (L), with in each case two electrodes of successive length within a triple having the same length ratio v with respect to one another, **characterized in that** the respective longest electrode (C) in a triple (A, B, C) is arranged on one side of the light guidance path and the two other shorter electrodes (A, B) are arranged along the other side of the light guidance path, on or in the substrate.

**2.** The phase modulator as claimed in claim 1, **characterized in that** the length ratio is:

$$v = \frac{1}{2} + \sqrt{\frac{5}{4}} \approx 1.618.$$

**3.** A digital phase modulator for a fiber-optic signal transmission or measurement device, which has a predetermined total number of electrodes of different length which are arranged parallel and on both sides of a light guidance path in or on an optical substrate, in which case preferably identical control potentials can be applied to the electrodes on both sides of the light guidance path, in such a way that a large number of phase values for a light wave which is running on the light guidance path can be set by changing the drive selection of electrode combinations within a predetermined value range,
and the electrodes are arranged in a plurality of triples along the light guidance path (L),

- the electrode length $l_{i,j}$ of the electrode triples above the lowest, least significant (LSB) triple being defined such that the length $\ell_{x,0}$ of the respectively shortest electrode (A) is:

$$a_x = l_{x,0} = \left( \sum_{i=0}^{x-1} \left( \sum_{j=0}^{2} |l_{i,j}| \right) \right) + 1$$

for $x \in \{1,2,3\}$,
where the index "i" denotes the triple number $\{0,1,2,3...\}$, and the index "j" indicates the number $\{0,1,2\}$ of the respective electrode in the triple, and

    ● the length $b_x$ of the respective central electrode is governed by the relationship $b_x = 2a_x$, and
    ● the length $c_x$ of the respectively longest electrode is given by the relationship $c_x = a_x + b_x$, wherein ($|a_0|$, $|b_0|$, $|c_0|$) = ($|l_{0,0}|$, $|l_{0,1}|$, $|l_{0,2}|$) = (1, 2, 3) are chosen as starting values for the calculation and

- the electrode lengths of the first, least significant (LSB) triple being chosen such that the smallest step widths of the light phase in the output value range of the phase modulator can be formed by addition and subtraction between the phase values of up to two electrodes of the lowest triple and an electrode of the next triple or zero, and
- in order to reduce the length ratio of the longest to the shortest electrode in the modulator in the lowest, least significant triple, its electrodes are relatively lengthened such that an addition of the length values of the two

shorter electrodes ($E_0$, $E_1$) results in the length value of the longest electrode (E2) in this lowest triple, and that the respectively longest electrode (C) in a triple (A, B, C) is arranged on one side of the light guidance path (L), and the two other, shorter electrodes (A, B) are arranged on the other side of the light guidance path (L), and in that the sum of the lengths of the two shorter electrodes (A, B) is equal to the length of the longest electrode (c).

4. The phase modulator as claimed in claim 3, **characterized in that** the two shorter electrodes (E0, E1) in the lowest triple have the respective length values $a_0 = |5|$ and $b_0 = |6|$ and the longest electrode (E2) in this triple has the length value $c_0 = |11|$.

5. The phase modulator as claimed in claim 3, **characterized in that** the two shorter electrodes (E0, E1) in the lowest triple have the respective length values $a_0 = |2|$ and $b_0 = |4|$ and the longest electrode (E2) in this triple has the length value $c_0 = |6|$.

6. The phase modulator as claimed in claim 3, **characterized in that** the two shorter electrodes (E0, E1) in the lowest triple have the respective length values $a_0 = |2|$ and $b_0 = |8|$ and the longest electrode (E2) in this triple has the length value $c_0 = |10|$.

7. The phase modulator as claimed in claim 3, **characterized in that** the two shorter electrodes (E0, E1) in the lowest triple have the respective length values $a_0 = |3|$ and $b_0 = |5|$ and the longest electrode (E2) in this triple has the length value $c_0 = |8|$.

8. The phase modulator as claimed in claim 3, **characterized in that** the two shorter electrodes (E0, E1) in the lowest triple have the respective length values $a_0 = |3|$ and $b_0 = |6|$ and the longest electrode (E2) in this triple has the length value $c_0 = |9|$.

9. The phase modulator as claimed in claim 3, **characterized in that** the two shorter electrodes (E0, E1) in the lowest triple have the respective length values $a_0 = |5|$ and $b_0 = |10|$ and the longest electrode (E2) in this triple has the length value $c_0 = |15|$.

10. The phase modulator as claimed in claim 3, **characterized in that** the two shorter electrodes (E0, E1) in the lowest triple have the respective length values $a_0 = |6|$ and $b_0 = |10|$ and the longest electrode (E2) in this triple has the length value $c_0 = |16|$.

11. The phase modulator as claimed in claim 3, **characterized in that** the two shorter electrodes (E0, E1) in the lowest triple have the respective length values $a_0 = |6|$ and $b_0 = |12|$ and the longest electrode (E2) in this triple has the length value $c_0 = |18|$.

12. The phase modulator as claimed in claim 3, **characterized in that** the two shorter electrodes (E0, E1) in the lowest triple have the respective length values $a_0 = |8|$ and $b_0 = |9|$ and the longest electrode (E2) in this triple has the length value $c_0 = |17|$.

13. The phase modulator as claimed in one of the preceding claims, **characterized by** an electronics having an electronic correction table, which is associated with the phase modulator, for conversion of binary phase values to non-binary drive values for the electrodes.

14. The phase modulator as claimed in claim 13, **characterized in that** the correction table is designed to be programmable in memory.

15. The phase modulator as claimed in claim 14, **characterized in that**, in addition to binary/non-binary conversion, the correction table contains correction values for correction of production-dependent and/or operation-dependent faults and errors in the phase modulator.

16. The phase modulator as claimed in claim 13, **characterized in that** at least two differently programmed correction tables (KT1 to KT4) are provided, between which it is possible to switch by means of a control device (30), as a function of an external parameter.

17. The phase modulator as claimed in claim 16, **characterized in that** the external parameter is the temperature.

**Revendications**

1. Modulateur de phase numérique pour un dispositif à fibres optiques de transmission de signaux ou de mesure, qui comporte un nombre total prédéfini d'électrodes de différentes longueurs disposées parallèlement et des deux côtés d'une trajectoire de guidage de lumière dans ou sur un substrat optique,
   étant précisé que les électrodes sont aptes à être sollicitées des deux côtés de la trajectoire de guidage de lumière avec des potentiels de commande de préférence égaux, de telle sorte que grâce à une sélection de commande alternée de combinaisons d'électrodes à l'intérieur d'une plage de valeurs prédéfinie, plusieurs valeurs de phase puissent être réglées pour une onde lumineuse passant sur ladite trajectoire,
   et que les électrodes (E0 à E11) sont disposées le long de la trajectoire de guidage de lumière (L) en plusieurs triplets, étant précisé qu'à l'intérieur de chaque triplet deux électrodes de longueurs successives ont le même rapport de longueurs v,
   **caractérisé en ce que** l'électrode la plus longue (C) d'un triplet (A, B, C) est disposée sur ou dans le substrat d'un côté de la trajectoire de guidage de lumière, et les deux autres électrodes plus courtes (A, B) le long de l'autre côté.

2. Modulateur de phase selon la revendication 1, **caractérisé en ce que** le rapport de longueurs est de

$$\upsilon = \frac{1}{2} + \sqrt{\frac{5}{4}} \approx 1{,}618 \ .$$

3. Modulateur de phase numérique pour un dispositif à fibres optiques de transmission de signaux ou de mesure, qui comporte un nombre total prédéfini d'électrodes de différentes longueurs disposées parallèlement et des deux côtés d'une trajectoire de guidage de lumière dans ou sur un substrat optique,
   étant précisé que les électrodes sont aptes à être sollicitées des deux côtés de la trajectoire de guidage de lumière avec des potentiels de commande de préférence égaux, de telle sorte que grâce à une sélection de commande alternée de combinaisons d'électrodes à l'intérieur d'une plage de valeurs prédéfinie, plusieurs valeurs de phase puissent être réglées pour une onde lumineuse passant sur ladite trajectoire,
   et que les électrodes sont disposées le long de la trajectoire de guidage de lumière (L) en plusieurs triplets,
   **caractérisé en ce que**

   - les longueurs d'électrodes $l_{i,j}$ des triplets d'électrodes au-dessus du triplet inférieur le moins significatif (LSB) sont fixées pour que l'on ait, pour la longueur $l_{x,o}$ de l'électrode la plus petite (A) :

   $$a_x = l_{x,o} = \left( \sum_{i=0}^{x-1} \left( \sum_{j=0}^{2} \left| l_{i,j} \right| \right) \right) + 1$$

   pour $x \in \{1,2,3\}$,
   l'indice "i" désignant le numéro de triplet {0,1,2,3...} et l'indice "j" indiquant le numéro {0,1,2} de l'électrode dans le triplet, et

   - pour la longueur $b_x$ de l'électrode du milieu, on a le rapport $b_x=2a_x$ et
   - pour la longueur $c_x$ de l'électrode la plus longue, on a le rapport $c_x=a_x+b_x$,

   étant précisé que l'on choisit comme valeurs de départ pour le calcul $(|a_0|.|b_0|.|c_0|)=|l_{0,0}|.|l_{0,1}|.|l_{0,2}|)=(1,2,3)$, et
   - les longueurs d'électrodes du premier triplet le moins significatif (LSB) sont choisies de telle sorte que les plus petites largeurs de pas de la phase lumineuse dans la plage de valeurs de sortie du modulateur de phase puissent être construites par la formation d'une somme ou d'une différence entre les valeurs de phase de jusqu'à deux électrodes du triplet inférieur et d'une électrode du triplet suivant ou zéro,
   - pour réduire le rapport de longueurs de l'électrode la plus longue sur l'électrode la plus courte du modulateur dans le triplet inférieur le moins significatif, les électrodes de celui-ci sont relativement allongées de telle sorte qu'une addition des valeurs de longueur des deux électrodes plus courtes (E0, E1) donnent la valeur de longueur de l'électrode plus longue (E2) de ce triplet inférieur,

   et **en ce que** l'électrode la plus longue (C) d'un triplet (A, B, C) est disposée d'un côté de la trajectoire de guidage de lumière (L) et les deux autres électrodes plus courtes (A, B) de l'autre côté, et **en ce que** la somme des longueurs des deux électrodes plus courtes (A, B) est égale à la longueur de l'électrode la plus longue (C).

4. Modulateur de phase selon la revendication 3, **caractérisé en ce que** les deux électrodes plus courtes (E0, E1) du triplet inférieur présentent respectivement les valeurs de longueur $a_0=|5|$ et $b_0=|6|$, et l'électrode la plus longue (E2) de ce triplet présente la valeur de longueur $c_0=|11|$.

5. Modulateur de phase selon la revendication 3, **caractérisé en ce que** les deux électrodes plus courtes (E0, E1) du triplet inférieur présentent respectivement les valeurs de longueur $a_0=|2|$ et $b_0=|4|$, et l'électrode la plus longue (E2) de ce triplet présente la valeur de longueur $c_0=|6|$.

6. Modulateur de phase selon la revendication 3, **caractérisé en ce que** les deux électrodes plus courtes (E0, E1) du triplet inférieur présentent respectivement les valeurs de longueur $a_0=|2|$ et $b_0=|8|$, et l'électrode la plus longue (E2) de ce triplet présente la valeur de longueur $c_0=|10|$.

7. Modulateur de phase selon la revendication 3, **caractérisé en ce que** les deux électrodes plus courtes (E0, E1) du triplet inférieur présentent respectivement les valeurs de longueur $a_0=|3|$ et $b_0=|5|$, et l'électrode la plus longue (E2) de ce triplet présente la valeur de longueur $c_0=|8|$.

8. Modulateur de phase selon la revendication 3, **caractérisé en ce que** les deux électrodes plus courtes (E0, E1) du triplet inférieur présentent respectivement les valeurs de longueur $a_0=|3|$ et $b_0=|6|$, et l'électrode la plus longue (E2) de ce triplet présente la valeur de longueur $c_0=|9|$.

9. Modulateur de phase selon la revendication 3, **caractérisé en ce que** les deux électrodes plus courtes (E0, E1) du triplet inférieur présentent respectivement les valeurs de longueur $a_0=|5|$ et $b_0=|10|$, et l'électrode la plus longue (E2) de ce triplet présente la valeur de longueur $c_0=|15|$.

10. Modulateur de phase selon la revendication 3, **caractérisé en ce que** les deux électrodes plus courtes (E0, E1) du triplet inférieur présentent respectivement les valeurs de longueur $a_0=|6|$ et $b_0=|10|$, et l'électrode la plus longue (E2) de ce triplet présente la valeur de longueur $c_0=|16|$.

11. Modulateur de phase selon la revendication 3, **caractérisé en ce que** les deux électrodes plus courtes (E0, E1) du triplet inférieur présentent respectivement les valeurs de longueur $a_0=|6|$ et $b_0=|12|$, et l'électrode la plus longue (E2) de ce triplet présente la valeur de longueur $c_0=|18|$.

12. Modulateur de phase selon la revendication 3, **caractérisé en ce que** les deux électrodes plus courtes (E0, E1) du triplet inférieur présentent respectivement les valeurs de longueur $a_0=|8|$ et $b_0=|9|$, et l'électrode la plus longue (E2) de ce triplet présente la valeur de longueur $c_0=|17|$.

13. Modulateur de phase selon l'une des revendications précédentes, **caractérisé par** un système électronique de commande d'un tableau de correction électronique associé au modulateur de phase, pour convertir des valeurs de phase binaires en valeurs de commande non binaires pour les électrodes.

14. Modulateur de phase selon la revendication 13, **caractérisé en ce que** le tableau de correction est conçu pour être programmable par mémoire.

15. Modulateur de phase selon la revendication 14, **caractérisé en ce que** le tableau de correction contient, en plus de la conversion binaire/non binaire, des valeurs de correction pour corriger des erreurs du modulateur de phase dues à la fabrication et/ou au fonctionnement.

16. Modulateur de phase selon la revendication 13, **caractérisé en ce qu'**il est prévu au moins deux tableaux de correction (KT1 à KT4) programmés différemment, entre lesquels un dispositif de commande (30) peut commuter en fonction d'un paramètre externe.

17. Modulateur de phase selon la revendication 16, **caractérisé en ce que** le paramètre externe est constitué par la température.

FIG. 1

FIG. 2

20 L1

22

Analog-
Elektroden

E5 E4 E3  E7 E8 E6    E10  E9    E1 E2 E0  L2
                        E11
  2        3          4        1

EP 1 595 179 B1

**FIG. 3**

Controller 30 — Korrektur 31 — Schalter 32 — nichtbinärer Phasenmodulator 33

**FIG. 4**

Controller 30 — Korrektur 31 — Schalter 32 — nichtbinärer Phasenmodulator 33

ext. Eingabe

**FIG. 5**

Controller 30 — KT1 KT2 KT3 KT4 (31) — Schalter 32 — nichtbinärer Phasenmodulator 33

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19753427 C1
- US 5137359 A